# EUROPEAN PATENT APPLICATION

(11) **EP 0 831 019 A1**
(43) Date of publication of application: **25.03.1998**
(21) Application number: 97116160.9
(22) Date of filing: 17.09.1997
(51) Int. Cl.: B62K 3/00, B62M 27/02, B62M 7/14

(54) **Electric locomotion means**

(30) Priority: 20.09.1996 IT MI961936
(71) Applicant: Biga' Italia S.r.l., 25020 Poncarale (Brescia) (IT)
(72) Inventor: Micheletti, Edi, 25020 Poncarale (Brescia) (IT)
(74) Representative: Lecce, Giovanni

(57) **Abstract**

An electric locomotion means (10), comprising a supporting frame (12) for an electric motor, constituted by a plurality of tubular elements and/or bars (14), (16), (26), tied to one another by welding or equivalent means; a tubular body (16) integral with the front part of frame (12) and angularly developed upwards in the direction of the back front of the same, connected at the lower end to at least a front wheel (24), (52) or sliding means (56) and, at the opposite end, at the opposite end, to a handle bar (20); at least a pair of rear wheels (30), connected to said frame and the shaft of the electric motor; and a running boards (36) located, between the rear wheels and on which the driver-user stays in upright position.

## Description

The present invention relates to an electric locomotion means.

More particularly, the present invention relates to an electric locomotion means especially suitable to be used by one only person for short transfer, either in the open or the inside, extremely compact, easy to handle and quickly operatable.

The need of utilising engine-driven locomotion means for short transfer is at present increasingly felt; however, it has to face difficulties of various kind, connected for instance to manoeuvre and parking spaces, as well as to the time which is consequently required; otter, the problem of quick transfers gives rise to such problems as to dishearten people from using engine-driven means. Besides, the circulation of conventional vehicles, in particular cars, is not allowed in given areas, because of environment pollution problems. However, in the present economic and social conditions, short and quick transfers are necessary in many different situations and within the most different contexts, not only in city centres: internal or external areas of factories, sports- and commercial facilities, airports, either for people transfer or for service activities, such as surveillance or the like are as many locations where having at disposal engine-driven compact and easily usable means would be desirable. The problem is felt also in the agricultural sector, for activities associated to the control of cultivations developed on large areas, and it is worsened by the very nature of the soil, which is bad, and therefore poorly practicable. The solutions that are available at present for short transfers in the aforementioned contexts can be brought back to the use of electric or explosion engine means, especially designed with the aim of reducing as much as possible encumbraces. In any case, they are always cabin-vehicles with one or more seats, which have always rather large sizes and traditional operating and driving systems, and therefore substantially complicated.

Using the conventional motor-cycles in some situations, such as for instance in the country, has well understandable limits and drawbacks that ensure from the soil morphology, and it may even be dangerous for users, because of the instability of the means.

Object of this invention is to obviate the above drawbacks.

More particularly, object of this invention is to provide a engine-driven locomotion means of extremely contained size, operatable at once and easily handleable, suitable to be used for different utilisations, both for work and other reasons.

Advantageously, the engibe-driven locomotion means according to the present invention is provided in the back part with a small-sized running board on which the user stays, and holding an upright position during the transfer, reaches easily the various controls for the movement and direction of said means.

A further object of the invention is to provide a locomotion means as defined above, suitable to ensure the necessary safety level for users in the various situations in which it is utilised.

A further object of the invention is to put at the disposal of users an engine-driven locomotion means that can ensure a high level of resistance and reliability in the time, and besides such as to be realisable easily and economically.

These and stil other objects are achieved by the engine-driven locomotion means of the present invention, which comprises a supporting frame for a propulsive unit, comprising a plurality of tubular elements and/or bars tied to one another by welding or equivalent means, a tubular body integral with the front part of the frame and angularly developed upwards in the direction of the back part of the same, wherein a rod is located which is connected at the lower end to at least a front wheel or sliding means, and, at the opposite end to a handle bar; at least a pair of rear wheels, connected to said frame and the motor shaft of an electric motor; and a running board located between the rear wheels and on which the driver stays in upright position.

The construction and functional characteristics of the electric locomotion means of the present invention will be better understood from the following description, wherein reference is made to the attached drawings which represent a preferred non limiting embodiment, as well as some variants for as many alternative uses, and wherein:
Figure 1 shows a schematical perspective view of one embodiment of the electric locomotion means of the present invention;
Figure 2 shows a schematical perspective view of another embodiment of the locomotion mans, referred in particular to the development of the body integrating the propulsive unit;
Figure 3 shows a schematical perspective view of the same locomotion means of the preceding figures, provided, by way of example, with greater section wheels for use on bad soils;
Figure 4 shows a schematical perspective view of the same locomotion means of Figures 2 and 3, equipped, by way of example, for use on snowy grounds;
Figure 5 shows a schematical perspective view of the same locomotion means of the preceding figures, provided, by way of example, with a back platform of greater size, for use by disabled; and
Figure 6 represents the schema of the electronic control system.

With reference to said figures, the electric locomotion means of the present invention, indicated as a whole by 10, is basically constituted by a supporting frame 12 advantageously formed by a plurality of tubular metal elements 14, caused to be integral with one another by welding or equivalent means. The tubular elements 14, which define as a whole a quadrangular, preferably trapezoid frame, are bent upwards in the front part and converge in the direction of the lonfitudinal axis of frame 12 to connect with a further tubular element 16; the latter develops angularly upwards and constitutes the seat for housing a rod 18 which, at the upper end, is connected to a handle bar 20 or the like, and is tied, at the opposite end, to a fork 22, with which at least one front wheel 24 is caused to be integral by known means.

The supporting frame 12, in the front part connecting with the tubular element 16, preferably comprises connecting elements 26, either tubular or bar-shaped, suitable to connect and strengthen said frame. Said elements 16, 26, which form as a whole the frame 12 may have any section whatever and be ade from steel or other suitable materials. The portion of the frame 12, which develops horizontally, forms the supporting base for a propulsive unit, constituted by an electric motor, tied to the tubular elements 14 by means known in themselves, for instance bolts with the possible interposition of elastomer support. The frame 12, in correnspondence of the back end of each tubular element 14, supports a rear wheel 30 whose axle is connected in a conventional manner to the motor shaft protruding from the electric motor.

The electric motor, which is fixed to the supporting frame 12, is shielded, at least on the top and along the periphery, by carcass or carter 32, tied to the same frame on several points with bolts, welding or the like. Said carter, whose configuration is suggested by way of non limiting example only in two alternative forms in the aforementioned figures, has at least one fully or partly openable or removable door.

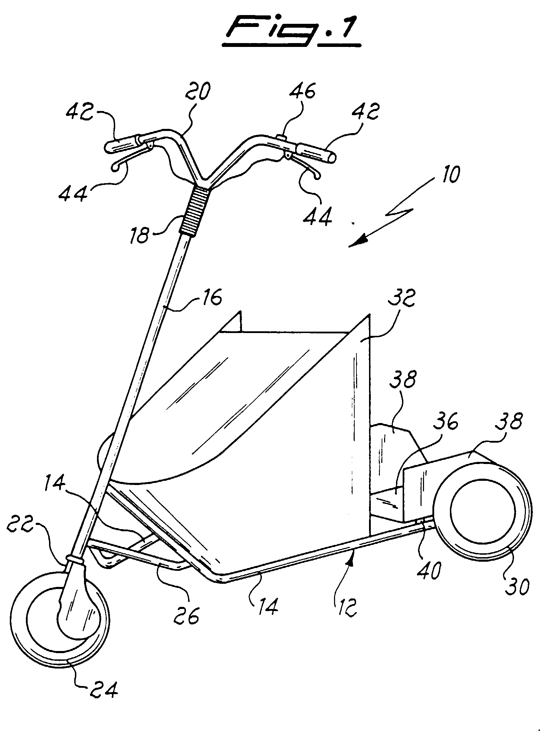

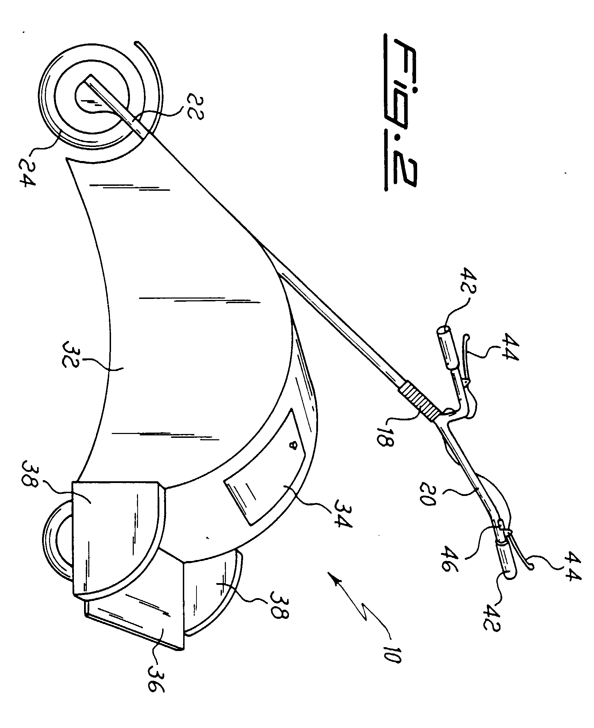

In Figure 2 the tiltable or removable door is indicated by 34. In the same figure, carter 32 has such a configuration as to fully shield also the supporting frame 12 and the many tubular elements that make it up; differently from the embodiment shown by way of example in Figure 1, wherein said frame remains on sight.

According to a preferred embodiment, the carter 32 is in the form of a "biga", namely a two-horse chariot used by the Roman people.

Between the rear wheels 30 a small metal running board 36 is housed, supported by the opposite tubular elements 14 of frame 2
12, to which it is caused to be integral by means of screws, bolts or the like.

According to a preferred embodiment, the longitudinal extension of the running board 36 is limited to the portion between the back part of carter 32 and the free end of the tubular element 14, so that said running board 36 does not extend beyond the rear wheels 30, or protrudes limitedly with respect to the same. Preferably, the board 36 is provided with opposite side walls 38, having a limitedly developed height, and an orthogonal orientation with respect to the running board 36, circumscribe the rear wheels 30 at the sides.

According to an advantageous characteristics of the invention, said running board 36 is articulated on the tubular elements 14 of frame 12, so as to rise with respect to them, by a limited portion when the locomotion means 10 is not used or when the user is not on the board 36. Such rising referred by way of example to the front part of the running board 36 directed to the carter 32, is caused by a device schematised as a whole by 40 in Figure 1, comprising an elastic element, for instance a spring, associated to an electric contact such as a microswitch or the like. The electric contact of said device connects the electric circuit of the electric motor 62 to a conventional battery 64, and closes automatically the related circuit the moment when the running board 36 lowers under the weight of the user who steps on the locomotion means 10.

The locomotion means 10 of the present invention comprises a speed control means comprising drum brakes arranged on the front wheel 24 and on the rear wheels 30 and operable by brake levers 44 located at the end of the handle bar 20.

At least one of the brake levers 44 may be provided with a locking means located on the handle bar 20 to jam the braker during the stop of the locomotion means.

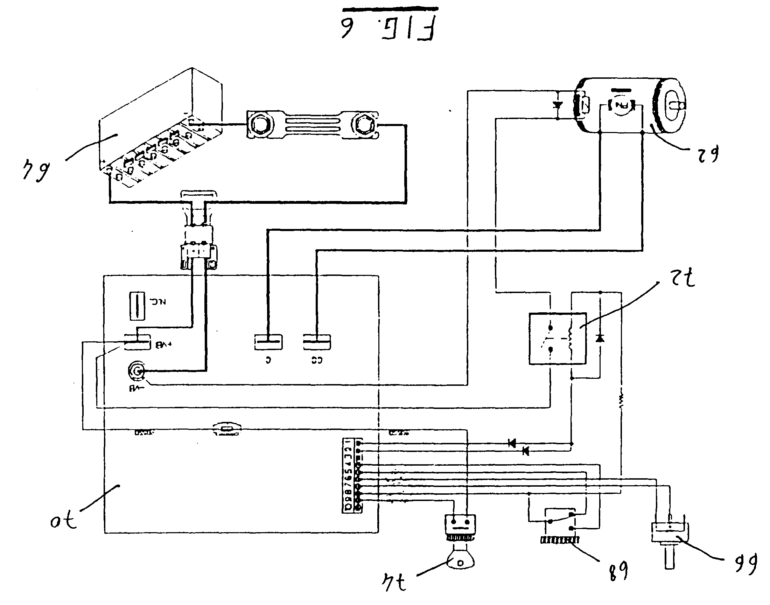

The speed control means also comprises an electronic control system, schematically illustrated in Figure 6, connected to the motor 62 and operable in response to the rotation of knobs 42 located at the end of the handle bar 20.

The electronic control system is bidirectional, at high frequency and microprocessor operated. Said electronic control system is provided with a reverse motion unit 66, an acceleration means 68 connected to the knobs 42 and with an electronic program circuit 70.

The electronic control system can be also provided with a safety contact breaker 72 and with an ignition lock key 74. Moreover, the electronic control system comprises a settable limiting device of the current applicable to the motor and with a heat limiting device operating at a settable temperature level such 70-80°C.

The acceleration of the motor obtained by the rotation of the knobs 42 allows 42 allows to achieve the maximum velocity in a gradual and homogeneous way. The current limiting device allows to regulate and to limit, as one wishes, the maximum current fed to the motor.

The braking is of regenerative type, which intervenes during deceleration, when the knob is released and when the motion is reversed, and can be regulated at will by the user.

An electric ignition push-button, indicated by 46, of any known type, is located on the handle bar 20.

The activation of the locomotion means 10 on its use is substantially direct, given the provision and location of the aforesaid members; the user, stepping on running board 36, compresses device 40, closes the key 74 and the subsequent activation of the push-button of device 46, positioned on handle bar 20, causes the start of the vehicle.

The inclination of the tubular element 16 wherein there is located the rod connected to the front wheel 24 and the handle bar 20, variable according to the size of carter 32, places the handle bar 20 in the best position of the user, who remains in upright position on the rolling board 36.

Stepping down from the latter once the vehicle has stopped, the electric contact of device 40 opens, being no longer burdened by the weight of the user, and as a consequence it interrupts automatically the electric circuit.

The rear wheels 30 are provided with differential gears.

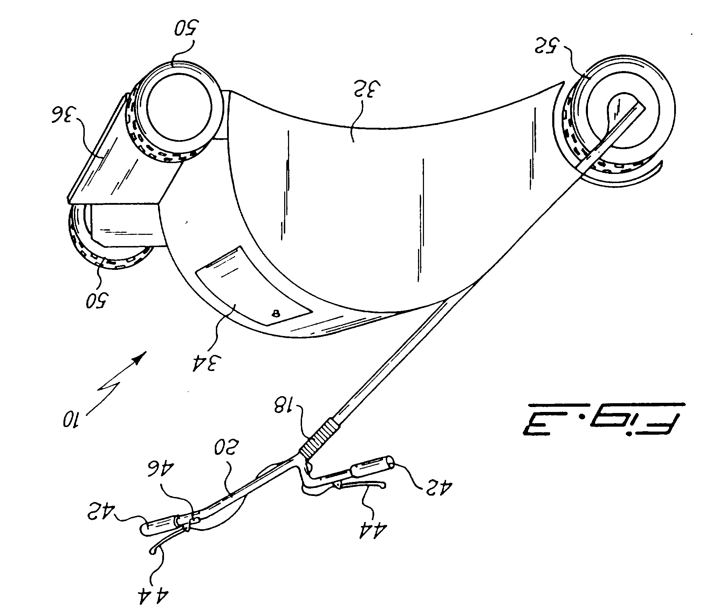

Figures 3, 4 and 5 illustrate schematically some possible execution variants of the locomotion means 10 of the present invention; said variants are referred, in particular, to the adoption of wheels or sliding means fit for special grounds, and the adoption of a larger board 36 for use by a specific class of users of said means, the general structure and working of the latter being the same.

The embodiments f Figure 3 takes up almost entirely the structural characteristics of the already described specimen(s), given that the only important modification, stressed in order to underline the versatility of means 10, is constituted by the presence of rear 50 and of front 52 driving wheels of the block-patterned type, for use of the means on bad grounds, for instance in agriculture. The upright position of the vehicle driver is, in this instance, particularly advantageous as it allows, besides the reduced size of the vehicle, the optimum and direct view of cultivations, especially of the inflorescences which emerge at the top of stems.

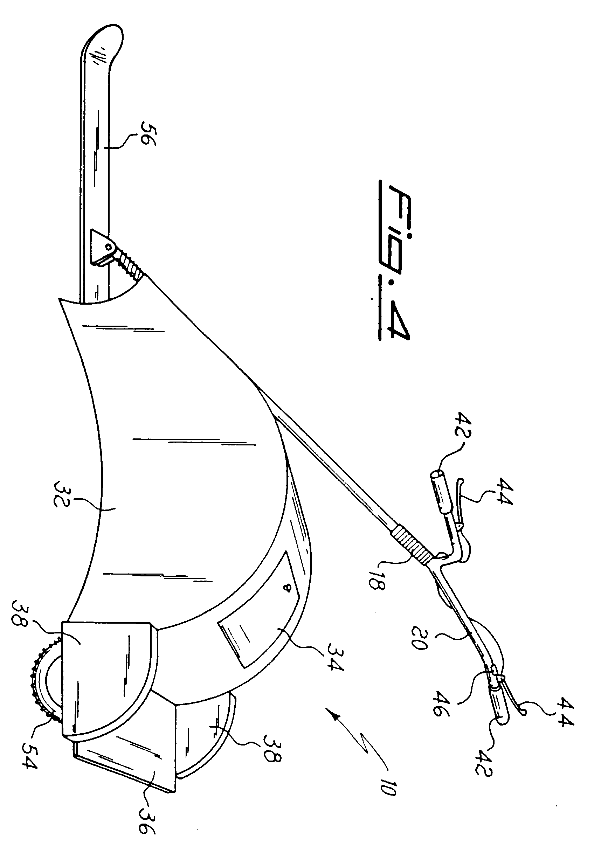

The embodiment shown in Figure 4 concerns the solution adaptable for the locomotion means 10 to be used on snowy grounds, in situations not necessarily connected to agriculture; for instance, it can be considered for the use of a locomotion means, having the structure and form defined by said embodiment, connecting routes in mountainsides, for communication and/or rapid transfer reasons.

For this purpose, the locomotion means 10 is provided with rear wheels 54 tracked or in any case specifically suitable for snowy grounds, and with at lest a front runner 56 replacing the conventional rubber wheel; said runner is orientable through the action of the same handle bar 20.

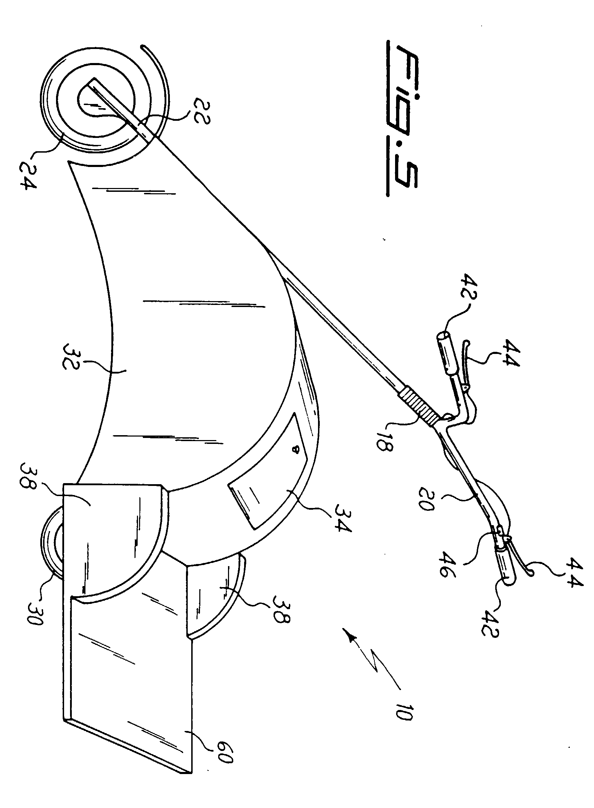

The embodiment of Figure 5 is a solution of the locomotion means 10 for the transfer along short distances for physically disabled people, bound to keep to wheeled chair.

The board 60, in this case, is provided with a longitudinal extension greater than the preceding versions, having to house the wheeled chair of the disabled, who remains seated on it. The access of the person to the supporting board 60 and risen by a limited height with regard to the ground, does not require complicated manoeuvres, and the handle bar 20 with the associated controls is inclined in a position suitable for controlling the locomotion means 10. Obviously, both in the present embodiment and in one or more of the other ones previously described, the inclination of rod 18 protruding from the tubular element 16 and carrying at the upper end the handle bar 20, can be adapted to the specific requirements through one or more articulations or joints of any type whatever and/or through the possibility of telescopically extending or reducing the length of the rod with means known in themselves. In the same way, all the above described embodiments may be provided with elastic shock absorbers or conventional suspensions located in correspondence of one or more of the wheels or sliding means, as well as with for light and/or sound signals, especially in the hypothesis of using said means in towns.

As can be inferred from the foregoing, the advantages achieved by the invention are evident.

The electric locomotion means of the present invention allows to make quick and safe transfer, occupying reduced spaces, especially because of its structure that require an upright position by the user.

The facility and immediate activation of the means are particularly advantageous, given the automatic closing of the electric circuit thanks to the contact automatically actionable through the pressed board.

Although the invention has been described hereabove in conjunction with specific embodiments offered for illustrative purpose only, it is evident that many alternatives and variants will be apparent to those skilled in the art, in light of the foregoing description.

Accordingly, the invention is intended to embrace all of the alternatives and variants that fall within the spirit and scope of the appended claims.

For instance, the locomotion means may be provided with two front wheels, spaced from one another or joined, and/or with a steering wheel instead of the handly bar.

The locomotion means, while keeping to the above described structural characteristics, may have a different form of the carter 32 covering the motor, battery and electronic control system, of the wheels, of the back platform and/or other components to configure further variants specifically utilisable in different situations and suitable to take upon also two people in upright position.

## Claims

1. A locomotion means comprising:
an electric motor having a motor shaft and connected to a battery;
a support frame (12) having a front part and a back part and comprising a plurality of tubular elements and/or bars (14, 16, 26) tied to one another;
a tubular body (16), having a lower end and an upper end, integral with the front part of the frame (12) and developed upwards;
at least a steerable front wheel (24) connected to the lower end of said tubular body (16);
a handle bar (20) connected to the upper end of said tubular body (16) and provided with end knobs (42);
a pair of rear wheels (30) connected to the back part of said support frame (12) and to the motor shaft;
a board (36) disposed between the rear wheels (30), configured to support at least one standing user or driver in upright position, and
a control means including brakes and a speed control element connected to said motor to control the speed of said locomotion means and comprising an electronic control system,
characterized in that:
said electronic control system is bidirectional, at high frequency, microprocessor operated and operable in response to the rotation of the knob (42) to control said electric motor;
said electronic control system is provided with a reverse motion unit (66) and with a recovery braking system operating at deceleration, release of the knob (42) and reversal of the motion;
and the control means further includes an electric contact (40) arranged between the support frame and the board (36) and operable under spring bias in response to the depression of said board by the user.

2. The locomotion means according to claim 1 wherein the tubular body (16) is angularly developed upwards in the direction of the back part of the frame (12) and its inclination is variable to place the handle bar (20) in the best position of the user.

3. The locomotion means according to claim 1 or 2, wherein the brakes are drum brakes arranged on the front (24) and rear (30) wheels and are operable by brake levers (44) located at the end of the handle bar (20).

4. The locomotion means according to claim 3, wherein at least one of the brake levers (44) is provided with a locking means.

5. The locomotion means according to anyone of the preceding claims, wherein the electronic control system is provided with an acceleration means (68) connected to the knobs (42), with an electronic program circuit (70), with a safety contact breaker (72) and with an ignition lock key (74).

6. The locomotion means according to anyone of the preceding claims, wherein the electronic control system is provided with a settable limiting device of the current applicable to the motor, and with a heat limiting device.

7. The locomotion means according to anyone of the preceding claims, wherein the electronic control system, the motor and the battery are covered by a carter (32) having a tiltable or removable front panel (34).

8. The locomotion means according to anyone of the preceding claims, wherein the board (36) is articulated on the frame (12) and an elastic element is arranged between the board (36) and the frame (12) to maintain the board (36) in a rised position with respect said frame (12); an electric contact connecting the electric motor (62) to the battery (64) being inserted between the board (36) and the frame (12); said contact being closed under the weight of the user.

9. The locomotion means according to anyone of the preceding claims, wherein the rear (50) and/or the front (52) wheels are of the block-patterned type.

10. The locomotion means according to anyone of the preceding claims from 1 to 8, wherein the rear wheels (54) are tracked and the front wheel is substituted by a runner (56).

11. The locomotion means according to anyone of the preceding claims, wherein the board (60) extends beyond the rear wheels (30) and it is provided with a longitudinal extension to house a wheeled chair and the tubular body (16) is provided with articulations or joints (18) to incline the handle bar (20) in a position suitable for the user.
